# EUROPÄISCHE PATENTSCHRIFT

(11) **EP 3 294 487 B1**
(45) Veröffentlichungstag und Bekanntmachung des Hinweises auf die Patenterteilung: **24.04.2019**
(21) Anmeldenummer: 17706792.3
(22) Anmeldetag: 23.02.2017
(51) Int. Cl.: B23K 26/00, B23K 26/359, B23K 26/70, B23K 26/03

(54) **VERFAHREN ZUM EINBRINGEN EINER DEFINIERTEN SCHWÄCHUNGSLINIE MIT EINEM GEPULSTEN LASERSTRAHL DURCH MATERIALABTRAG AN EINEM ÜBERZUGSMATERIAL**
METHOD OF INTRODUCING A DEFINED LINE OF WEAKNESS IN A COVERING MATERIAL BY THE REMOVAL OF MATERIAL USING A PULSED LASER BEAM
PROCÉDÉ DE FABRICATION D'UNE PERFORATION DE SÉPARATION DANS UN ÉLÉMENT DE REVÊTEMENT PAR ENLÈVEMENT DE MATÉRIAU UTILISANT DE FAISCEAU LASER PULSÉ

(30) Priorität: 24.03.2016 DE 102016105567
(43) Veröffentlichungstag der Anmeldung: 21.03.2018
(73) Patentinhaber: Eissmann Automotive Deutschland GmbH, 72574 Bad Urach (DE)
(72) Erfinder: MAUERSBERGER, Stefan, 09518 Grossrückerswalde (DE)
(74) Vertreter: Mammel und Maser
(86) Internationale Anmeldenummer: PCT/EP2017/054172
(87) Internationale Veröffentlichungsnummer: WO 2017/162397

(56) Entgegenhaltungen:
- EP-A1- 2 093 011
- EP-A2- 2 962 800
- DE-A1-102005 040 017
- DE-B3-102013 104 138
- DE-C1- 19 636 429
- DE-U1-202009 004 927
- US-A1- 2001 006 168

## Beschreibung

Die vorliegende Erfindung betrifft ein Verfahren zum Einbringen einer definierten Schwächungslinie mit einem gepulsten Laserstrahl durch Materialabtrag an einem Überzugsmaterial. Überzugsmaterialien mit eingebrachten Schwächungen werden im Automobilbereich eingesetzt, beispielsweise zur Herstellung von Überzügen für Airbags. Der Oberbegriff des Anspruchs 1 basiert auf der EP 2 962 800 A2.

Airbags sind heutzutage in Kraftfahrzeugen an verschiedenen Stellen, zum Beispiel in Lenkrädern, Armaturenbrettern, Türen, Sitzen, Dachverkleidungen usw., integriert. Für eine zuverlässige Funktionsweise des Airbags ist es notwendig, dass der Kunststoffträger in allen seinen Schichten eine bzw. mehrere Materialschwächungen, sogenannte Sollbruchstellen, aufweist, die den Schusskanal des Airbags definieren.

Aus optischen Gründen beziehungsweise wegen des Designs fordern die Kraftfahrzeughersteller, dass beispielsweise der Beifahrerairbag, der im Armaturenbrett integriert ist, auf der dem Insassen zugewandten Seite hin unsichtbar gestaltet ist. Dazu wird das Armaturenbrett mit der darin integrierten Airbagklappe mit einem Überzugsmaterial versehen, das im Bereich der Berandung der Airbagklappe eine Schwächungslinie aufweist, so dass die sichere Öffnung der Airbagklappe und die Entfaltung des Airbags bei einem Aufprall gewährleistet bleibt.

Das Öffnen des Überzugsmaterials entlang der Schwächungslinie muss zudem innerhalb eines vorgegebenen Zeitfensters erfolgen. Ebenso muss ein unkontrollierter Partikelflug durch umherfliegende Bruchstücke des Überzugs auf jeden Fall vermieden werden.

Solche Überzugsmaterialien für Airbags sind aus unterschiedlichen Materialien bekannt, beispielsweise aus Kunststofffolien, Bezugsstoffen, Textilien, Slush, Kunstleder oder faserigen Materialien wie Naturleder. Gerade bei gehobenen Fahrzeugausstattungen werden die Überzüge häufig aus Naturleder hergestellt. Das im Automobilbereich eingesetzte Leder besteht aus einer Oberhaut und einer Lederhaut. Aufgrund der Dickenschwankungen des Leders und der verhältnismäßig geringen Dicke der Oberhaut wird bei der Erzeugung von Schwächungen in dem Leder durch Einschneiden in die Rückseite des Leders mit einem Messer oder einer Klinge häufig eine Schnitttiefe gewählt, bei der die Oberhaut unverletzt bleibt. Die natürlichen Schwankungsbreiten der unverletzten Oberhaut führen allerdings zu einer starken Schwankungsbreite der Reißfestigkeit.

Gerade bei Sollbruchlinien für Airbagabdeckungen sind die Anforderungen an eine reproduzierbare und geringe Reißfestigkeit besonders hoch, die bei einem mechanischen Einschneiden nicht immer erfüllt werden kann.

Es wurde bereits vorgeschlagen, in das Leder voneinander beabstandete linienförmige Perforationen einer Länge von weniger als 0,8 mm einzubringen, wie in der EP 1 750 978 B1 beschrieben. Ein auf diese Weise geschwächtes Leder weist aufgrund der minimalen Größe der eingebrachten Perforationen, die in der Größe der Lederporen liegen, im Wesentlichen unsichtbare Schwächungen bei guten Aufreißeigenschaften auf, wobei die Schwächungen insbesondere mit einer Klinge eingebracht werden.

Zudem ist bekannt, Schwächungslinien insbesondere auch in Airbagüberzugsmaterialien oder in Dekorschichten für Airbagabdeckungen mittels Lasern zu perforieren. Zum gezielten Schwächen von Leder mittels UV-Laserstrahlung werden Mikrolöcher in das Material eingebracht. Diese sind im Allgemeinen entlang einer Bahn angeordnet und bilden dadurch eine definierte Schwächungslinie. Die Bestrahlung erfolgt auf die Rückseite, die sogenannte Fleischseite des Leders, so dass die Vorder- bzw. Oberseite des Leders durch die Laserstrahlung nur minimal geschädigt wird.

Die Mikrolöcher werden im Allgemeinen durch mehrfache Bestrahlung mit einzelnen Laserpulsen generiert. Da Leder ein sehr inhomogenes Material ist, schwankt die Anzahl der Laserpulse, die zum vollständigen Durchbohren des Leders notwendig sind, erheblich, die Abweichungen betragen etwa ± 50 % vom Mittelwert.

Für eine definierte und sichere Perforation ist das vollständige oder nahezu vollständige Durchbohren des Leders jedoch unabdingbar.

Wird das Leder an der Stelle eines Mikrolochs jedoch weiter bestrahlt, obwohl schon eine vollständige Durchbohrung erfolgt ist, so stellt sich sehr schnell eine unerwünschte lokale Verfärbung und Aufhärtung des Leders ein.

Um Veränderungen in der Faserstruktur des Leders, die zur Aufwerfung und damit zur Sichtbarkeit der Schwächungslinie führen, zu vermeiden, wurde beispielsweise vorgeschlagen, das Leder vor der Laserbearbeitung entweder zu unterkühlen oder vorzuschrumpfen oder es mit einem speziellen Fixiermittel auf der Rückseite zu behandeln, wie in der WO 2005/049261 beschrieben.

Die DE 196 36 429 C1 beschreibt ein Verfahren zur Erzeugung einer Schwächungslinie in einem Überzugsmaterial durch einseitiges örtliches Abtragen des Überzugsmaterials in Form von Sacklöchern mittels steuerbarer gepulster Laserstrahlung, wobei eine Relativbewegung zwischen der Laserstrahlung und dem Überzugsmaterial in Richtung der zu erzeugenden Schwächungslinie erfolgt und die durch den Boden des jeweiligen Sacklochs transmittierte Laserstrahlung nach jedem Laserpuls mittels eines Sensors detektiert, der Integralwert gebildet und mit einem Sollwert verglichen wird und die Laserstrahlung bei Erreichen des Sollwertes abgeschaltet und nach erfolgter Relativbewegung beim nächsten noch zu schwächenden Sackloch wieder angeschaltet wird.

Eine solche Bestimmung der Restwandstärke mittels einer Transmissionsmessung macht es allerdings erforderlich, dass der Sensor bzw. die Fotodiode der Position des Laserstrahls folgt. Um an jedem Auftreffort den Laserpuls messen und den Laser gegebenenfalls abschalten zu können, wird die Fotodiode entsprechend der Bewegung des Laserstrahls auf der Sichtseite des Überzugsmaterials mitbewegt. Dieses Verfahren ist jedoch beim Einsatz von hochrepetierenden Lasern nicht realisierbar, da sich die Fotodiode nicht in der erforderlichen Geschwindigkeit mit der erforderlichen Genauigkeit bewegen lässt.

Aus der EP 2 962 800 A2 ist ein Verfahren zum Einbringen einer definierten Schwächungslinie bekannt, bei dem ein gepulster Laserstrahl aus einem Laser auf die Rückseite eines Überzugsmaterials gerichtet und entlang einer Bahn geführt wird. Unterhalb der Sichtseite des Überzugsmaterials ist eine Beobachtungseinheit angeordnet.

Die EP 2 093 011 A1 lehrt ein Verfahren zum Einbringen einer Bohrung in eine Wand eines Werkstücks, bei dem ein die Wand durchdringender Laserstrahl auf eine optische Faser trifft, welche den Laserstrahl absorbiert.

Aus der US 2012/0104237 A1 ist ein Strahlendetektionssystem mit einer Sensoreinheit bekannt, wobei die Sensoreinheit eine Hohlkammer mit einer streuenden Innenfläche aufweist und an der Hohlkammer eine Beobachtungseinheit vorgesehen ist, die auf die Innenfläche der Hohlkammer treffende Laserstrahlung wenigstens teilweise zu der Beobachtungseinheit hin streut.

Die DE 10 2013 104 138 B3 lehrt ein Verfahren, bei dem die optische und haptische Veränderung des mittels eines Laserstrahls geschwächten Leders dadurch verhindert werden soll, dass der Laserstrahl linienförmig an der Rückseite des Leders geführt wird und das linienförmige Führen ein mehrfaches Wiederholen einer Abtastbewegung ist, bei der entlang der Linie jeweils pro Auftreffort nur ein Laserpuls abgegeben wird. Die Parameter des Laserimpulses sind dabei so gewählt, dass dieser einen Energieeintrag bewirkt, der am jeweiligen Auftreffort zu einer Erwärmung des Überzugsmaterials auf eine Temperatur oberhalb einer Ablationsschwelle führt, jedoch die Temperatur in an den jeweiligen Auftrefforten angrenzenden Bereichen des Überzugsmaterials unterhalb einer Grenztemperatur liegt.

Die Kontrolle der Restwandstärke erfolgt ebenfalls mit einer Fotodiode, die dem Kurzpulslaser in Richtung des Laserstrahls gegenüberstehend auf der Sichtseite des faserigen Überzugsmaterials angeordnet ist. Die Fotodiode misst kontinuierlich die Stärke eines durch das faserige Überzugsmaterial transmittierenden Anteils der Laserpulse, so dass der Laserstrahl beim Erreichen der gewünschten minimalen Restwandstärke noch vor einem vollständigen Durchtritt durch das faserige Überzugsmaterial abgeschaltet werden kann. Ist an einem Auftreffort bereits die minimale Restwandstärke erreicht, erfolgt bei der nächsten Abtastbewegung eine lokale Abschaltung des Laserstrahls an diesem Auftreffort.

Damit die Abtastbewegung entfallen kann, ist entlang der Abtastbahn eine Vielzahl von aneinandergereihten Fotodioden vorgesehen. Bei diesem Verfahren muss der Sensor räumlich hochauflösend sein (mindestens im Bereich des Lochabstands der Perforationslinie), und er muss die Größe des zu bearbeitenden Perforationsabschnitts besitzen. Ändert sich die Geometrie der Perforationslinie, so muss ein neues Sensorarray in die Bearbeitungsanlage integriert werden. Dies macht das Verfahren unflexibel.

Nachdem jedoch bei Aneinanderreihung der Fotodioden immer noch blinde Bereiche verbleiben, an denen keine Messung des Laserpulses erfolgen kann, ermöglicht auch dieses Verfahren nicht die gewünschte sichere Kontrolle.

Die Aufgabe der vorliegenden Erfindung besteht darin, die Verfahren zur Einbringung von Schwächungslinien mittels eines gepulsten Laserstrahls durch Materialabtrag an einem Überzugsmaterial, insbesondere Leder, dahingehend zu verbessern, dass sie auch unter Einsatz von hochrepetierenden Laserquellen und hoch-dynamischen Laser-Scanvorrichtungen durchgeführt werden können und hinreichend geschwächte Überzugsmaterialien mit im Wesentlichen unsichtbaren Schwächungslinien erhalten werden.

Diese Aufgabe wird durch die Merkmale des Anspruchs 1 gelöst.

Erfindungsgemäß ist unterhalb der Sichtseite des Überzugsmaterials wie Leder eine Hohlkammer mit einer wenigstens teilweise reflektierenden bzw. streuenden Innenfläche vorgesehen, an der eine Beobachtungseinheit angeordnet ist, so dass die bei der Laserbestrahlung auf der Sichtseite des Überzugsmaterials aus dem Mikroloch austretende und auf die Innenfläche der Hohlkammer auftreffende Laserstrahlung wenigstens teilweise auf die Beobachtungseinheit reflektiert und/oder gestreut wird und die auf die Beobachtungseinheit fallende Strahlung des Lasers gemäß Anspruch 1 zur Steuerung des Lasers verwendet wird.

Wird gemäß Anspruch 2 nicht nur eine streuende bzw. reflektierende, sondern auch lumineszierende Innenfläche eingesetzt, wird beim Auftreffen der Laserstrahlung auf die Innenfläche Lumineszenzlicht erzeugt und in der Beobachtungseinheit dann das Lumineszenzlicht gemessen.

Sobald das Mikroloch in dem Überzugsmaterial durchbohrt ist, gelangt Laserstrahlung in die sich unterhalb der Sichtseite des Überzugsmaterials befindliche Hohlkammer, die gemäß Anspruch 1 eine streuende und/oder reflektierende Oberfläche aufweist. Die auf die Innenfläche der Hohlkammer auftreffende Laserstrahlung wird dort gestreut und reflektiert, wobei ein Teil der Strahlung dann auf die Beobachtungseinheit gelangt, die die Intensität des auftreffenden Laserlichts misst.

Die Hohlkammer kann unabhängig von der jeweiligen Geometrie der Perforationslinien eingesetzt werden, sofern die Größe der Hohlkammer auf der Grundlage einer Perforationslinie maximaler Größe ausgewählt wird.

Die Überschreitung eines bestimmten Schwellwerts der Intensität der detektierten Strahlung zeigt an, dass das Loch durchbohrt oder die Restwand hinreichend geschwächt ist, so dass bei der nächsten Abtastbewegung eine lokale Abschaltung des Lasers an diesem Auftreffort erfolgt.

Das erfindungsgemäße Verfahren lässt sich auch bei hochdynamischen Laser-Prozessen einsetzen, da die Hohlkammer stationär ist und nicht, wie es bei den aus dem Stand der Technik bekannten Sensoren bekannt ist, entsprechend der Bewegung des Laserstrahls bewegt werden muss. Um die Durchbohrung der Löcher über die gesamte entlang einer Bahn angeordneten Löcher überwachen zu können, sollte sich die Hohlkammer auf der Sichtseite des Leders wenigstens entlang der gesamten mit dem Laser zu bearbeitenden Bahn erstrecken.

Vorzugsweise ist die Hohlkammer im Wesentlichen rechteckig, wobei das Überzugsmaterial, insbesondere Leder, mit seiner Sichtseite auf der nach oben weisenden Außenfläche der Hohlkammer aufliegt. In der nach oben weisenden Seite der Kammer ist ein Schlitz. Die Bewegung des Lasers erfolgt entlang dem Schlitz, so dass das Laserlicht nach Durchbohren eines Mikrolochs durch das Leder in den Innenraum der Hohlkammer eintreten kann.

Da der Laserstrahl auf den Auftreffort auf dem Leder maximal fokussiert ist, weitet sich der Laserstrahl nach dem Durchbohren des Leders auf der Sichtseite des Leders wieder auf, so dass auf der Innenseite der Hohlkammer eine Fläche mit dem Laserstrahl bestrahlt wird, die größer als der Durchmesser des Mikrolochs ist, was zu einer Mittelung der gemessenen Lichtintensitäten und Verringerung von Artefakten beiträgt.

Die Größe der mit dem Laserlicht bestrahlten Innenfläche kann durch den Abstand zwischen dem Mikroloch und dem ersten Auftreffort des Laserstrahls auf der Innenfläche der Hohlkammer gesteuert werden. Je größer die bestrahlte Fläche ist, desto diffuser ist die auf das Beobachtungselement auftretende Strahlung.

Im Allgemeinen beträgt der Abstand c zwischen dem Mikroloch in dem Überzugsmaterial und dem ersten Auftreffort des Laserstrahls auf der Innenfläche der Hohlkammer zwischen 1 cm und 20 cm, vorzugweise zwischen 5 cm und 10 cm. Ausgehend von einer 20 cm langen und 20 cm breiten Airbagabdeckung empfiehlt es sich, eine kastenförmige, etwa 40 cm lange (Länge l), 30 cm breite (Breite b) und 5 cm bis 10 cm tiefe (Tiefe c) Hohlkammer vorzusehen, in deren nach oben weisenden Seite ein etwa 10 mm breiter Schlitz vorgesehen ist, der in seinem Verlauf dem Verlauf der Schwächungslinie entspricht.

Die Innenfläche der Hohlkammer sollte ein hohes Reflexionsvermögen aufweisen und möglichst wenig absorbieren, um bei einem jeden, auch von der Fotodiode maximal entfernten Mikroloch noch genügend Licht auf die Fotodiode zu streuen/reflektieren.

Diese bevorzugte Variante zeichnet sich durch eine hohe Signalstärke aus.

In einer weiteren besonders bevorzugten Variante gemäß Anspruch 2 streut und reflektiert die Innenfläche der Hohlkammer nicht nur, sondern ist zudem lumineszierend, so dass die Laserstrahlung in eine energieärmere Wellenlänge umgewandelt und in der Beobachtungseinheit die Intensität der Lumineszenzstrahlung detektiert wird. Die Empfindlichkeit von herkömmlichen Si-Fotodioden ist im VIS-Bereich (Lumineszenz) deutlich höher als im UV-Bereich. Außerdem erfolgt die Emission der Lumineszenzstrahlung ungerichtet (diffus).

Durch die gleichmäßige Abstrahlcharakteristik der Lumineszenz- bzw Fluoreszenzstrahlung gelangt immer ein Teil der Strahlung direkt oder über Mehrfachreflexionen an den Kammerwänden zu der oder den Fotodiode(n), welche seitlich an der Hohlkammer angebracht ist /sind. Die Detektion der Fluoreszenzstrahlung durch die Beobachtungseinheit, insbesondere Fotodioden, wird als Trigger für den Prozessabbruch genutzt. Die Zuordnung des Messsignals zum Perforationsort wird über die Synchronisation von Laserstrahlquelle, Scanvorrichtung, Beobachtungseinheit und der Laserpulssteuerung bzw. Laserpulsabschaltvorrichtung realisiert, so dass der Ort, an dem die Laserstrahlung auf die Innenfläche der Hohlkammer auftrifft, irrelevant ist.

Soweit die Innenfläche der Hohlkammer lumineszierend ist, sollte die Innenfläche für die Lumineszenzstrahlung selbst ein möglichst hohes Reflexions- bzw. Streuvermögen aufweisen.

Als kostengünstige Innenflächenbeschichtung der Hohlkammer kann Papier verwendet werden, das ein hohes Reflexionsvermögen aufweist und fluoresziert.

Um eine besonders hohe Reflexion und eine geringe Absorption zu erreichen, ist die Verwendung einer Bariumsulfatbeschichtung der Innenfläche oder die Verwendung von optischem PTFE bevorzugt. Diese Beschichtungen fluoreszieren nicht und sind somit nur in der Variante einsetzbar, in der das gestreute Laserlicht detektiert wird.

Eine Kombination aus einer lumineszierenden Innenfläche in der Kammer (am Boden), in der UV-Strahlung absorbiert und in Lumineszenzstrahlung umgewandelt wird und eine reflektierende bzw. streuende Innenfläche an der Wand der Kammer ist ebenfalls möglich.

Ein Vorteil des erfindungsgemäßen Verfahrens besteht darin, dass das Verfahren auch bei hellen oder lumineszierenden Überzugsmaterialien, insbesondere Ledern, zuverlässig angewandt werden kann, denn etwaiges konkurrierendes, durch den auftreffenden Laserstrahl auf das helle Leder erzeugtes Lumineszenzlicht wird nahezu vollständig in Richtung der Rückseite des Leders abgestrahlt und gelangt somit nicht oder nur zu einem verschwindend geringen Anteil durch das Mikroloch auf die Innenseite der Hohlkammer.

In einer bevorzugten Variante fällt der gepulste Laserstrahl aus dem Laser zunächst über einen Spiegel und eine Scanvorrichtung auf die Rückseite des Überzugsmaterials, wobei der Laserpuls durch die Scanvorrichtung entlang der Bahn geführt wird. Die Scanvorrichtung dient dazu, den Laserstrahl auf der Rückseite des Leders entlang auf der gewünschten Bahn zu bewegen.

Im Allgemeinen umfassen Scanvorrichtungen einen Scankopf mit einer Treiber- und Ansteuerelektronik. Im Scankopf wird der Laserstrahl abgelenkt, dessen Ablenkungswinkel gemessen und (meistens) elektronisch geregelt. Im Allgemeinen sollten die Ablenkgeschwindigkeit, der Arbeitsabstand zu dem Überzugsmaterial, die Bearbeitungsgeometrie und die Anzahl der Überfahrten (Wiederholungen des Bearbeitungszyklus') bei der zu verwendenden Scanvorrichtung veränderbar sein. Die einfachste Methode, um eine Scanbewegung zu erzeugen, ist die Veränderung der Orientierung eines Spiegels.

Die Beobachtungseinheit dient dazu, den Laserprozess, d.h. das Bohren der Mikrolöcher, zu überwachen. Die Beobachtungseinheit kann beispielsweise ein Kamera- oder Fotodiodensystem sein. Ebenfalls ist möglich, mehrere Fotodioden oder andere Beobachtungseinheiten an der Hohlkammer vorzusehen. Die Beobachtungseinheit ist vorzugsweise seitlich angeordnet, wobei es unerheblich ist, an welcher Seite. Die Größe der Beobachtungseinheit kann beispielsweise 50 mm x 35 mm x 15 mm betragen, Die Beobachtungseinheit ist vorzugsweise eine Silizium-Fotodiode mit einer Empfindlichkeit zwischen 200 nm und 1100 nm. Die lichtempfindliche Fläche kann beispielsweise 13 mm² umfassen und eine Empfindlichkeit von 0,3 A/W.

Die Fotodiode(n) sind stationär und befinden sich vorzugsweise seitlich an der Hohlkammer und detektieren gestreute Laserstrahlung oder Fluoreszenzstrahlung unabhängig vom Auftreffort der Laserstrahlung in der Kammer.

Sobald in der Beobachtungseinheit die Überschreitung eines Schwellwerts des in der Beobachtungseinheit gemessenen Lichtes detektiert wird, wird eine Abschaltung des Lasers an diesem Ort bewirkt. Dies erfolgt mit einer Pulsabschaltungsvorrichtung. Die Pulsabschaltvorrichtung sollte sehr schnell sein, d.h. wenigstens 50.000 Löcher pro Sekunde überwachen können, sehr kurze Pulse mit Halbwertsbreiten von ca. 35 Nanosekunden verarbeiten können und auch zur Verarbeitung von Signalen mit einem sehr geringen Pegel von 10 mV bis 20 mV geeignet sein.

Die Schaltschwelle kann mittels eines einstellbaren Referenzpegels festgelegt werden.

Zudem sollte die Pulsabschaltvorrichtung wenigstens 10.000 Werte (entsprechend 0,6 m bei einem Lochabstand von 60 Mikrometern) speichern können.

Durch die Option zur Speicherung der Sensordaten ist darüber hinaus eine hervorragende Möglichkeit zur Qualitätssicherung der Lederperforation und einem Nachweis über die erfolgreiche Bearbeitung gegeben.

Die Überschreitung eines bestimmten Schwellenwerts kann als Trigger für den Prozessabbruch genutzt werden, d. h. es wird keine weitere Laserbearbeitung an dieser Stelle des Leders mehr durchgeführt.

Im Rahmen des erfindungsgemäßen Verfahrens wird vorzugsweise ein gepulster UV-Laser eingesetzt, wobei ein Festkörperlaser mit einer Wellenlänge von 355 nm oder ein Excimerlaser mit einer Wellenlänge von 351 nm, 308 nm oder 248 nm besonders bevorzugt ist. Die Pulszeiten sollten vorzugsweise unter 200 ns liegen. Der Strahldurchmesser beträgt 5 bis 50 Mikrometer und vorzugsweise etwa 20 Mikrometer.

Als Überzugsmaterial wird vorzugsweise Leder, Kunstleder oder Planware verwendet. Im Allgemeinen beträgt der Durchmesser eines mit dem Laser in das Überzugsmaterial eingebrachten Lochs vorzugsweise 5 bis 50 Mikrometer und besonders bevorzugt 10 bis 20 Mikrometer bei einem Lochabstand von 25 bis 100 Mikrometer, vorzugsweise 35 bis 60 Mikrometer. Die Löcher befinden sich auf einer Linie, die gerade, aber auch gewellt, zickzackförmig oder anders verlaufen kann.

Die mit dem erfindungsgemäßen Verfahren hergestellten Airbagbezüge zeichnen sich dadurch aus, dass die perforierten Stellen nicht sichtbar und nicht fühlbar sind und der Airbagüberzug, der vorzugsweise aus Leder ist, dennoch bei definierter Kraft zerreißt. Zudem ist eine prozesssichere Wiederholbarkeit gegeben.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Darstellung des erfindungsgemäßen Verfahrens und des Aufbaus,
Figur 2 den schematischen Strahlungsverlauf in der Hohlkammer,
Figur 3 eine schematische perspektivische Darstellung der Hohlkammer,
Figur 4 eine schematische Darstellung des Signalpegels in der Beobachtungseinheit in Abhängigkeit von der Zahl der Wiederholungen und
Figur 5 eine schematische Darstellung des Signalpegels der Beobachtungseinheit in Abhängigkeit von den Mikrolöchern.

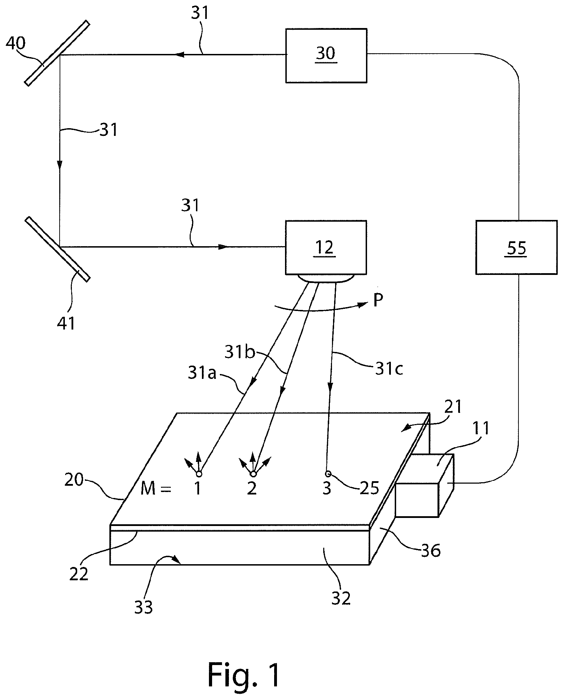

In **Figur 1** ist schematisch ein Laser 30, eine Beobachtungseinheit 11, eine Scanvorrichtung 12 und ein Lederstück 20 dargestellt. Die Rückseite 21 des Lederstücks 20 weist in Figur 1 nach oben. Unterhalb der Sichtseite 22 des Lederstücks 20 ist eine Hohlkammer 32, deren Innenfläche 33 mit einem reflektierenden Material beschichtet ist. In einer Seitenwand 36 der Hohlkammer 32 ist eine Fotodiode als Beobachtungseinheit 11 vorgesehen.

Der aus dem Laser 30 austretende fokussierte gepulste Laserstrahl 31, dessen Strahlengang ebenfalls mit 31 bezeichnet ist, wird an einem ersten Spiegel 40 und einem zweiten Spiegel 41 reflektiert und gelangt in die Scanvorrichtung 12, die dazu dient, den Laserstrahl 31 entlang einer bestimmten Bahn 50 über das Lederstück 20 zu bewegen, wie durch den Pfeil P in der Figur 1 symbolisch dargestellt ist. Da die Laserstrahlung gepulst ist und der Laserstrahl 31 über das Lederstück 20 entlang der Bahn 50 bewegt wird, wird der Laserstrahl 31 zunächst zu dem Ort M = 1 entsprechend dem Strahl 31a bewegt, dann zu dem Ort M = 2 entsprechend dem Strahl 31b und so weiter. Bei der Bearbeitung entsteht an jedem Ort M ein punktweiser Abtrag. Wird der Bewegungsablauf nun mit einer großen Anzahl von Wiederholungen W durchgeführt, so entsteht nach und nach an jedem Ort M des punktförmigen Abtrags eine vollständige Durchbohrung des Leders 20, nämlich ein Loch 25.

Im Bereich des Leders 20 in Figur 1 sind verschiedene Orte M = 1, 2, .. auf dem Leder markiert.

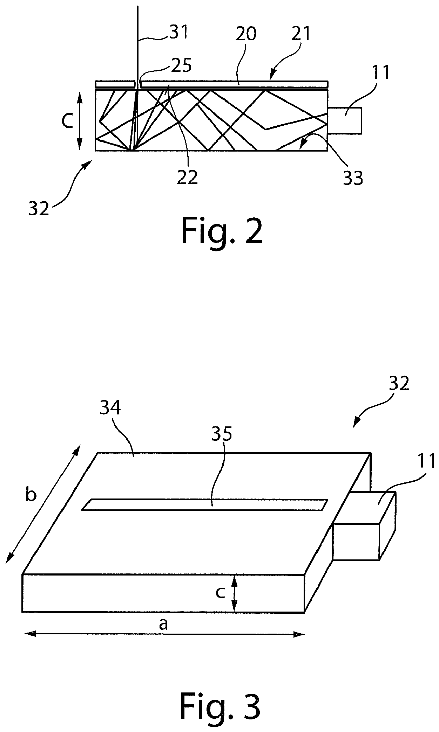

Der Durchtritt des Lichts durch das Loch 25 erfolgt, sobald das Loch 25 vollständig durchbohrt ist, vgl. Ort M = 3. Der Laserpuls gelangt nun in die Hohlkammer 32 und fällt auf deren Innenfläche 33, wird dort reflektiert und gelangt in einer Folge von Reflektionen in der Hohlkammer 32 auf die Beobachtungseinheit, nämlich die Fotodiode 11, wie in Figur 2 schematisch dargestellt ist.

In Figur 2 erkennt man auch, dass der auf die reflektierende Innenfläche 33 auftreffende gepulste Laserstrahl 31 etwas aufgeweitet ist und das Laserlicht durch eine Vielzahl von Reflektionen und Streuungen zu einem gewissen Teil auf die Fotodiode 11 gelangt.

Die Darstellung in Figur 2 gilt entsprechend auch, wenn die Innenfläche 33 lumineszierend ist. In diesem Fall fällt der gepulste Laserstrahl 31 auf die Innenfläche 33, und wird zum Teil in Lumineszenzlicht umgewandelt, das dann zum Teil auf die Fotodiode gestreut/reflektiert wird.

Zum Teil wird das Laserlicht jedoch gestreut und gelangt an einen anderen Ort der Innenfläche 33 mit einem Luminophor und wird dann dort in Lumineszenzlicht umgewandelt etc., so dass im Ergebnis ein Teil des primären oder gestreuten Laserlichts 31 durch Streuung und Absorption in längerwelliges Lumineszenzlicht umgewandelt wird, das dann in der Fotodiode detektiert wird.

Figur 3 zeigt schematisch den Aufbau der Hohlkammer 32, die kastenförmig und geschlossen ist, bis auf einen Schlitz 35 in der nach oben weisenden Seite 34. Das Leder 20 ist so auf dem Schlitz 35 zu drapieren, dass die mit dem Laserpuls abzufahrende Bahn 50 oberhalb des Schlitzes 35 verläuft, so dass nach Durchbohren eines Mikrolochs 25 das Laserlicht in die Hohlkammer 32 fallen kann.

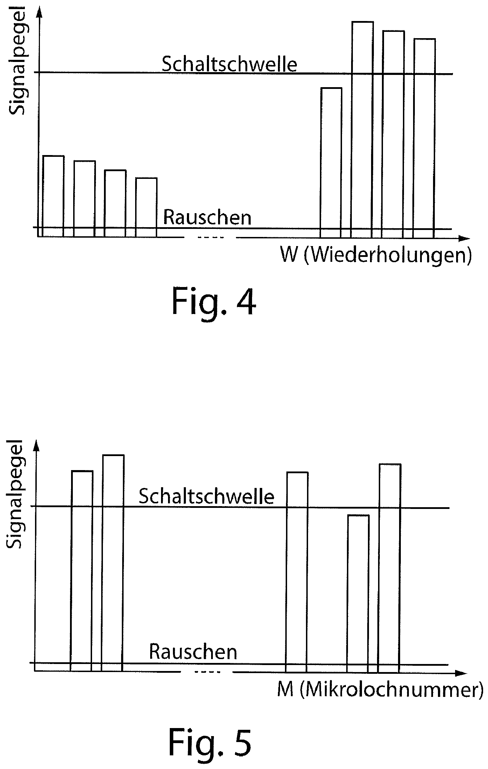

In **Figur 4** ist der Signalpegel der mit der Beobachtungseinheit 11 detektierten Strahlung schematisch in Abhängigkeit von der Anzahl der Wiederholungen W dargestellt. Nachdem das Leder 20 zunächst noch kein Loch 25 aufweist und die Strahlung 31 des Lasers 30 auch nicht durch das Leder 20 durchtreten kann, wird anfänglich nur ein Rauschen detektiert. Nach einer Vielzahl von Wiederholungen W steigt der Signalpegel plötzlich an, und die Schaltschwelle wird überschritten. Das Überschreiten der Schaltschwelle wird von der Beobachtungseinheit 11 registriert und im Folgenden der Bohrprozess für dieses Mikroloch 25 beendet.

In **Figur 5** ist der Signalpegel für verschiedene Mikrolöcher 25 dargestellt. Nachdem im Allgemeinen die in das Naturmaterial Leder 20 eingebrachten Mikrolöcher 25 voneinander abweichen, sind auch die an einem jeden Mikroloch 25 gemessenen Signalpegel in der Regel unterschiedlich.

Die Erfassung des Signalpegels erfolgt für jedes zu generierende Mikroloch 25 während der Laserbearbeitung, so dass bei einer weiteren Abarbeitung des Bewegungsalgorithmus der Laser 30 nur noch an den Stellen der nicht vollständig durchbohrten Mikrolöcher 25 zugeschaltet wird. Auch kann der Laserprozess bei einer bestimmten Anzahl von durchbohrten Mikrolöchern 25 vollständig abgebrochen werden.

## Patentansprüche

1. Verfahren zum Einbringen einer definierten Schwächungslinie durch Materialabtrag an einem Überzugsmaterial (20), das eine Sichtseite (22) und eine der Sichtseite (22) gegenüberliegende Rückseite (21) aufweist, bei dem ein gepulster Laserstrahl (31) aus einem Laser (30) auf die Rückseite (21) des Überzugsmaterials (20) gerichtet und entlang einer Bahn (50) geführt wird und wenigstens eine Beobachtungseinheit (11) zur Überwachung des Schwächungsprozesses vorgesehen ist, **dadurch gekennzeichnet, dass** unterhalb der Sichtseite (22) des Überzugsmaterials (20) eine Hohlkammer (32) vorgesehen ist, die eine streuende und/oder reflektierende Innenfläche (33) aufweist und die wenigstens eine Beobachtungseinheit (11) an der Hohlkammer (32) vorgesehen ist, wobei das bei der Laserbestrahlung auf der Sichtseite (22) des Überzugsmaterials (20) austretende Licht (40) auf die Innenfläche (33) der Hohlkammer (32) auftrifft und wenigstens teilweise auf die wenigstens eine Beobachtungseinheit (11) gestreut und/oder reflektiert wird und das auf die wenigstens eine Beobachtungseinheit (11) fallende Licht zur Steuerung des Lasers (30) verwendet wird.

2. Verfahren nach Anspruch 1, **dadurch gekennzeichnet, dass** die Hohlkammer eine lumineszierende Innenfläche aufweist und, dass das bei der Laserbestrahlung auf der Sichtseite (22) des Überzugsmaterials (20) austretende Licht (40) auf die Innenfläche (33) der Hohlkammer (32) auftritt, wenigstens teilweise in Lumineszenzlicht umgewandelt und wenigstens teilweise auf die wenigstens eine Beobachtungseinheit (11) gestreut und/oder reflektiert wird und das auf die wenigstens eine Beobachtungseinheit (11) fallende Lumineszenzlicht zur Steuerung des Lasers (30) verwendet wird.

3. Verfahren nach Anspruch 1 oder 2, **dadurch gekennzeichnet, dass** der gepulste Laserstrahl (31) aus dem Laser (30) über einen Spiegel (41) und eine Scanvorrichtung (12) auf die Rückseite des Überzugsmaterials (20) fällt.

4. Verfahren nach einem der vorangegangenen Ansprüche, **dadurch gekennzeichnet, dass** sich die Hohlkammer (32) wenigstens unterhalb der gesamten Bahn (50) erstreckt.

5. Verfahren nach einem der vorangegangenen Ansprüche, **dadurch gekennzeichnet, dass** die Hohlkammer (32) rechteckig ist.

6. Verfahren nach einem der vorangegangenen Ansprüche, **dadurch gekennzeichnet, dass** das Überzugsmaterial (20), die Hohlkammer (32) und der Laser (30) während der Bewegung des Laserstrahls (31) entlang der Bahn (50) ortsfest sind.

7. Verfahren nach einem der vorangegangenen Ansprüche, **dadurch gekennzeichnet, dass** in einer Wand (34) der Hohlkammer (32) ein Schlitz (35) ist.

8. Verfahren nach Anspruch 7, **dadurch gekennzeichnet, dass** der Schlitz (35) in seinem Verlauf dem Verlauf der Schwächungslinie entspricht.

9. Verfahren nach einem der vorangegangenen Ansprüche, **dadurch gekennzeichnet, dass** der Abstand c zwischen einem Mikroloch (25) des Überzugsmaterials (20) und der Innenfläche (33) der Hohlkammer (32) zwischen 1 cm und 20 cm beträgt.

10. Verfahren nach Anspruch 9, **dadurch gekennzeichnet, dass** der Abstand c zwischen dem Mikroloch (25) des Überzugsmaterials (20) und der Innenfläche (33) der Hohlkammer (32) zwischen 5 cm und 10 cm beträgt.

11. Verfahren nach einem der vorangegangenen Ansprüche, **dadurch gekennzeichnet, dass** die Innenfläche (33) der Hohlkammer (32) aus Papier ist.

12. Verfahren nach einem der vorangegangenen Ansprüche, **dadurch gekennzeichnet, dass** der Laser (30) abgeschaltet wird, sobald die wenigstens eine Beobachtungseinheit (11) eine Über- oder Unterschreitung eines Schwellwerts des in der wenigstens einen Beobachtungseinheit (11) gemessenen Lichtes detektiert.

13. Verfahren nach einem der vorangegangenen Ansprüche, **dadurch gekennzeichnet, dass** die Innenfläche (33) der Hohlkammer (32) bei der Beobachtungswellenlänge der wenigstens einen Beobachtungseinheit (11) diffus streut.

## Claims

1. Method according to claim 1 **characterized in that** the hollow chamber (32) comprises a luminescent inner surface (33) and that the light (40) emerging during the laser irradiation on the visible side (22) of the covering material (20) strikes the inner surface (33) of the hollow chamber (32) and is scattered and/or reflected at least partially onto the at least one observation unit (11) and the light which is incident on the at least one observation unit (11) is used for controlling the laser (30).

2. Method according to claim 1 **characterized in that** the hallow chamber (32) comprises a luminescent inner surface (33) and that the light (40) emerging during laser irradiation onto the visible side (22) of the covering material (20) strikes the inner surface (33) of the hollow chamber (32), is converted at least partially into luminescent light and scattered at least partially onto the at least one observation unit (11) and/or reflected, and the luminescent light which is incident on the at least one observation unit (11) is used for controlling the laser (30).

3. Method according to claim 1 or 2, **characterised in that** the pulsed laser beam (31) from the laser (30) falls on the rear side of the covering material (20) via a mirror (41) and a scanning device (12).

4. Method according to one of the preceding claims, **characterised in that** the hollow chamber (32) extends at least below the entire track (50).

5. Method according to one of the preceding claims, **characterised in that** the hollow chamber (32) is rectangular.

6. Method according to one of the preceding claims, **characterised in that** the covering material (20), the hollow chamber (32) and the laser (30) are fixed during the movement of the laser beam (31) along the track (50).

7. Method according to one of the preceding claims, **characterised in that** a slot (35) is provided in a wall (34) of the hollow chamber (32).

8. Method according to claim 7, **characterised in that** the slot (35) corresponds in terms of its course to the course of the line of weakness.

9. Method according to one of the preceding claims, **characterised in that** the distance c between the microhole (25) of the covering material (20) and the inner surface (33) of the hollow chamber (32) is between 1 cm and 20 cm.

10. Method according to claim 9, **characterised in that** distance c between the microhole (25) of the covering material (20) and the inner surface (33) of the hollow chamber (32) is between 5 cm and 10 cm.

11. Method according to one of the preceding claims, **characterised in that** the inner surface (33) of the hollow chamber (32) is made of paper.

12. Method according to one of the preceding claims, **characterised in that** the laser (30) is switched off as soon as the at least one observation unit (11) detects when a threshold value of the light measured in the at least one observation unit (11) is exceeded or fallen below.

13. Method according to one of the preceding claims, **characterised in that** the inner surface (33) of the hollow chamber (32) scatters diffusely at the observation wavelength of the at least one observation unit (11).

## Revendications

1. Procédé destiné à réaliser une ligne d'affaiblissement définie, et ce par enlèvement de matière au niveau d'un matériau de revêtement (20) qui présente une face visible (22) et une face arrière (21) située à l'opposé de la face visible (22), procédé lors duquel un rayon laser puisé (31) provenant d'un laser (30) est dirigé sur la face arrière (21) du matériau de revêtement (20) et est guidé le long d'une trajectoire donnée (50), et au moins une unité d'observation (11) est prévue pour surveiller ledit processus d'affaiblissement, **caractérisé en ce qu'**au-dessous de la face visible (22) du matériau de revêtement (20) est prévue une chambre creuse (32) qui présente une surface intérieure diffusante et/ou réfléchissante (33) et **en ce que** ladite au moins une unité d'observation (11) est prévue au niveau de la chambre creuse (32), la lumière (40) qui, lors de l'irradiation laser, sort par la face visible (22) du matériau de revêtement (20) venant frapper la face intérieure (33) de la chambre creuse (32) et étant diffusée et/ou réfléchie au moins en partie sur ladite au moins une unité d'observation (11), et la lumière tombant sur ladite au moins une unité d'observation (11) étant utilisée pour commander le laser (30).

2. Procédé selon la revendication 1, **caractérisé en ce que** la chambre creuse présente une surface intérieure luminescente et que la lumière (40) qui, lors de l'irradiation laser, sort par la surface visible (22) du matériau de revêtement (20), vient frapper la surface intérieure (33) de la chambre creuse (32), est au moins en partie transformée en lumière luminescente et est diffusée et/ou réfléchie au moins en partie sur ladite au moins une unité d'observation (11), et **en ce que** la lumière luminescente tombant sur ladite au moins une unité d'observation (11) est utilisée pour commander le laser (30).

3. Procédé selon la revendication 1 ou 2, **caractérisé en ce que** le rayon laser puisé (31) provenant du laser (30) tombe, via un miroir (41) et un dispositif scanneur (12), sur la face arrière du matériau de revêtement (20).

4. Procédé selon l'une quelconque des revendications précédentes, **caractérisé en ce que** la chambre creuse (32) s'étend au moins au-dessous de la totalité de la trajectoire (50).

5. Procédé selon l'une quelconque des revendications précédentes, **caractérisé en ce que** la chambre creuse (32) est de forme rectangulaire.

6. Procédé selon l'une quelconque des revendications précédentes, **caractérisé en ce que** le matériau de revêtement (20), la chambre creuse (32) et le laser (30) gardent leur emplacement respectif pendant que le rayon laser (31) se déplace le long de la trajectoire (50)

7. Procédé selon l'une quelconque des revendications précédentes, **caractérisé en ce qu'**une fente (35) est ménagée dans une paroi (34) de la chambre creuse (32) .

8. Procédé selon la revendication 7, **caractérisé en ce que** le tracé de la fente (35) correspond au tracé de la ligne d'affaiblissement.

9. Procédé selon l'une quelconque des revendications précédentes, **caractérisé en ce que** la distance c entre un micro-trou (25) du matériau de revêtement (20) et la surface intérieure (33) de la chambre creuse (32) est comprise entre 1 cm et 20 cm.

10. Procédé selon la revendication 9, **caractérisé en ce que** la distance c entre le micro-trou (25) du matériau de revêtement (20) et la surface intérieure (33) de la chambre creuse (32) est comprise entre 5 cm et 10 cm.

11. Procédé selon l'une quelconque des revendications précédentes, **caractérisé en ce que** la surface intérieure (33) de la chambre creuse (32) est en papier.

12. Procédé selon l'une quelconque des revendications précédentes, **caractérisé en ce que** le laser (30) est mis à l'arrêt dès que ladite au moins une unité d'observation (11) détecte que la lumière mesurée dans ladite au moins une unité d'observation (11) passe au-dessus ou au-dessous d'une valeur de seuil donnée.

13. Procédé selon l'une quelconque des revendications précédentes, **caractérisé en ce que** la surface intérieure (33) de la chambre creuse (32) disperse la lumière de manière diffuse pour la longueur d'onde d'observation de ladite au moins une unité d'observation (11).
